# EUROPÄISCHE PATENTANMELDUNG

(11) **EP 0 761 362 A1**
(43) Veröffentlichungstag der Anmeldung: **12.03.1997**
(21) Anmeldenummer: 96111223.2
(22) Anmeldetag: 18.07.1996
(51) Int. Cl.: B23K 7/00, B21D 28/28

(54) **Vorrichtung zur maschinellen Bearbeitung von Rohren**

(30) Priorität: 01.08.1995 DE 19528109
(71) Anmelder: Seufert, Albert, 97688 Bad Kissingen (DE)
(72) Erfinder: Seufert, Albert, 97688 Bad Kissingen (DE)

(57) **Zusammenfassung**

Eine Vorrichtung zur maschinellen Schneidbearbeitung von Rohren ist versehen mit:
- einem Grundrahmen (1),
- einer daran angeordneten, rotationsgetriebenen Lagervorrichtung zur drehbaren Lagerung des zu bearbeitenden Rohres (4), die einen zwickelartigen Auflagebereich (18) für das zu bearbeitende Rohr (4) bildet,
- einer Niederhalteeinrichtung (19) für das Rohr (4) in Form eines in Richtung des zwickelartigen Auflagebereiches (18) beaufschlagbaren Druckhebels (20),
- einem werkzeugfreien, berührungslos arbeitenden Schneidgerät (30),
   -- das an einer Schwenkeinrichtung (31) um eine Schwenkachse (S2) schwenkbar gelagert ist, die konzentrisch mit einer Lagerwelle (5, 6) der Lagervorrichtung für das Rohr (4) angeordnet ist,
   -- dessen Schneidkopf (32) in einem Soll-Arbeitsabstand (a) zum zwickelartigen Auflagebereich (18) sowie mit seiner Schneidarbeitsrichtung (A) radial bezüglich der Schwenkachse (S1) steht, und
   -- dessen Schwenkeinrichtung (31) derart über einen Koppelmechanismus (42) mit dem Druckhebel (20) der Niederhalteeinrichtung (19) zwangsgekoppelt ist, daß der Druckhebel (20) automatisch die für den Durchmesser eines jeweils zu bearbeitenden Rohres (4) entsprechende Soll-Schwenkposition des Schneidergerätes (30) einstellt,
- einem Linearantrieb (39) zur Relativverschiebung von Schneidgerät (30) und zu bearbeitendem Rohr (4) in Rohrlängsrichtung (L), und
- einer Steuereinrichtung (63), die mit dem Drehantrieb (11) der rotationsgetriebenen Lagervorrichtung und mit dem Linearantrieb (39) für die obengenannte Relatiwerschiebung zur Erzeugung einer überlagerten Rotations-Linear-Bewegung von Rohr (4) und Schneidgerät (30) zueinander gekoppelt ist.

## Beschreibung

Die Erfindung betrifft eine Vorrichtung zur maschinellen Schneidbearbeitung von Rohren, insbesondere zum maschinellen Ausklinken von Rohren, zum Einbringen von Ausschnitten in die Rohrwandung und dergleichen. Allgemein gesprochen sollen also durch die Vorrichtung praktisch beliebig geformte Durchdringungskurven an hohlzylindrischen Werkstücken hergestellt werden.

Aus der DE 42 19 431 C2 ist eine Vorrichtung zum maschinellen Ausklinken oder Ausschweifen von Rohren bekannt, die ein Gestell und eine daran angeordnete, rotationsgetriebene Lagervorrichtung zur drehbaren Lagerung des zu bearbeitenden Rohres aufweist. Ferner ist an dieser Vorrichtung ein werkzeugfreies, berührungslos arbeitendes Schneidgerät, insbesondere ein Laser-, Autogenbrenn-, Wasserstrahl- oder Plasma-Schneidgerät zur Schneidbearbeitung des Rohres vorgesehen, das über Linearantriebe an einer kreuzschlittenartigen Führungsvorrichtung am Gestell in einer auf der Drehachse des Rohres liegenden Ebene relativ zum Rohr zweidimensional verschiebbar geführt ist. Zur Schneidbearbeitung des Rohres ist dessen Drehbewegung und damit überlagert die Bewegung des Schneidgerätes mittels einer Steuereinrichtung steuerbar, die mit dem Rotationsantrieb der Lagervorrichtung und mit den Linearantrieben der kreuzschlittenartigen Führungsvorrichtung verbunden ist.

Nachteilig bei der bekannten Rohrbearbeitungsvorrichtung ist die Tatsache, daß die kreuzschlittenartige Führungsvorrichtung für das Schneidgerät in konstruktiver Hinsicht relativ aufwendig ist, da dabei mit sich kreuzenden Linearantrieben gearbeitet werden muß. Da ferner mit zwei Linearantrieben gearbeitet wird, ist der steuerungstechnische Aufwand dafür vergleichsweise hoch.

Weiterhin ist zu beachten, daß bei der vorbekannten Schneidvorrichtung das Schneidgerät erst aus seiner Arbeitsposition in eine nach oben weggefahrene Ruheposition verbracht werden muß, um das Werkstück aus der Lagervorrichtung entnehmen und ein neues Werkstück einlegen zu können. Nach dem Einlegen eines neuen Werkstückes muß das Schneidgerät wieder bis unmittelbar an das Werkstück herangefahren werden. Dies bedingt zum einen einen zusätzlichen Zeitaufwand bei Werkstückwechsel, der sich auf die Kapazität der Bearbeitungsmaschine negativ auswirkt. Darüber hinaus muß bei der Heranfahrbewegung des Schneidgerätes an das Werkstück mit einer Abtasteinrichtung in der Art eines Endschalters gearbeitet werden, die ein Anschlagen des Schneidgerätes an das Rohr wirkungsvoll unterbindet. Der Endschalter wiederum muß in die Steuerung eingebunden sein, was einen zusätzlichen steuerungstechnischen Aufwand mit sich bringt.

Ausgehend von der geschilderten Problematik liegt der Erfindung die Aufgabe zugrunde, eine Vorrichtung zur maschinellen Schneidbearbeitung von Rohren ohne Einbußen an Bearbeitungsmöglichkeiten zu vereinfachen, insbesondere soll die beim genannten Stand der Technik vorhandene, kreuzschlittenartige Führungsvorrichtung entfallen und damit ein Linearantrieb eingespart werden können. Gleichzeitig soll die Schneidvorrichtung so beschafft sein, daß ein Werkstückwechsel schneller vonstatten gehen kann.

Diese Aufgabe wird durch die im Patentanspruch 1 angegebene Ausgestaltung der Schneidvorrichtung gelöst. Demnach wird zwar nach wie vor die aus dem Stand der Technik bekannte und dort verwendete rotationsgetriebene Lagervorrichtung zur drehbaren Lagerung des zu bearbeitenden Rohres verwendet, die aus mindestens zwei in Rohrlängsrichtung mit Abstand zueinander angeordneten Scheibenpaaren mit jeweils zwei parallel zueinander ausgerichteten Scheiben gebildet ist. Jedes Scheibenpaar bildet dabei durch einen seitlichen Versatz der Rotationsachsen der Scheiben einen zwickelartigen Auflagebereich für das zu bearbeitende Rohr, in das es lediglich eingelegt werden muß. Aufgrund der erfindungsgemäßen Ausgestaltung der Bearbeitungsvorrichtung entfällt jedoch vollständig die kreuzschlittenartige Führungsvorrichtung, indem das berührungslos arbeitende Schneidgerät an einer Schwenkeinrichtung um eine Schwenkachse schwenkbar gelagert ist, die konzentrisch mit einer Rotationsachse einer der Scheiben der Lagervorrichtung das Rohr angeordnet ist. Der Schneidkopf des Schneidgerätes ist dabei in seinem Soll-Arbeitsabstand zum zwickelartigen Auflagebereich sowie mit seiner Schneidarbeitsrichtung radial bezüglich der Schwenkachse angeordnet. Die Schwenkeinrichtung ist über einen Koppelmechanismus mit dem Druckhebel einer Niederhalteeinrichtung zwangsgekoppelt, der von oben auf das Rohr absenkbar ist und am Grundrahmen um eine parallel zur Rohrachse liegende Schwenkachse gelenkig gelagert ist. Der Druckhebel ist zudem in Richtung des zwickelartigen Auflagebereiches beaufschlagbar, so daß er ein auf der rotationsgetriebenen Lagervorrichtung liegendes Rohr von oben beaufschlagt und festhält. Durch diese Beaufschlagung tastet der Druckhebel praktisch den Durchmesser des zu bearbeitenden Rohres ab. Aufgrund der Zwangskopplung zwischen der Schwenkeinrichtung für das Schneidgerät und dem Druckhebel über den Koppelmechanismus stellt sich das Schneidgerät automatisch in die für den Durchmesser eines jeweils zu bearbeitenden Rohres entsprechende Soll-Position ein. In dieser Stellung steht der Schneidkopf senkrecht zur Tangente an der Rohrwandung im Soll-Arbeitsabstand. Die anschließende Schneidbearbeitung des Rohres mit innerhalb gewisser Grenzen praktisch frei wählbarer Schnittführung erfolgt dann durch eine überlagerte Rotations-Linear-Bewegung von Rohr und Schneidgerät relativ zueinander, die durch eine überlagerte Ansteuerung des Drehantriebes der rotationsgetriebenen Lagervorrichtung für das Rohr und des Linearantriebes zur Relativverschiebung von Schneidgerät und zu bearbeitendem Rohr in Rohrlängsrichtung mittels einer Steuereinrichtung gesteuert wird.

Wie aus der vorstehenden Erläuterung deutlich wird, muß im Gegensatz zum Stand der Technik also nur noch ein Linearantrieb sowie ein Drehantrieb angesteuert werden, was den verminderten steuerungstechnischen und konstruktiven Aufwand mit sich bringt.

Da das Schneidgerät ferner im Bereich einer der Rotationsachsen der Scheibenpaare der rotationsgetriebenen Lagervorrichtung - also unterhalb des Rohres - angeordnet ist, braucht das Schneidgerät bei einem Werkstückwechsel nicht erst nach oben weggefahren werden, wie dies beim Stand der Technik der Fall ist. Bei Einlegen eines neuen Werkstückes mit anderem Durchmesser wird nur die entsprechende Soll-Schwenkposition des Schneidgerätes eingestellt, was über den Koppelmechanismus automatisch erfolgt.

Weitere Merkmale, Einzelheiten, bevorzugte Ausführungsformen und Vorteile der Erfindung sind den Unteransprüchen und der nachfolgenden Beschreibung entnehmbar, in der ein Ausführungsbeispiel der Erfindung anhand der beigefügten Figuren näher erläutert wird. Es zeigen
- Fig. 1: eine schematische Ansicht einer erfindungsgemäßen Schneidvorrichtung in Rohrlängsrichtung,
- Fig. 2: eine Seitenansicht der Vorrichtung aus Pfeilrichtung II nach Fig. 1,
- Fig. 3: eine schematische Detailansicht des Schneidgerätes mit Schwenkeinrichtung ebenfalls in Pfeilrichtung II gemäß Fig. 1,
- Fig. 4: eine schematische Detailansicht des Schneidgerätes aus Pfeilrichtung IV nach Fig. 3 und
- Fig. 5: ein Blockschaltbild der Steuereinrichtung der Schneidvorrichtung.

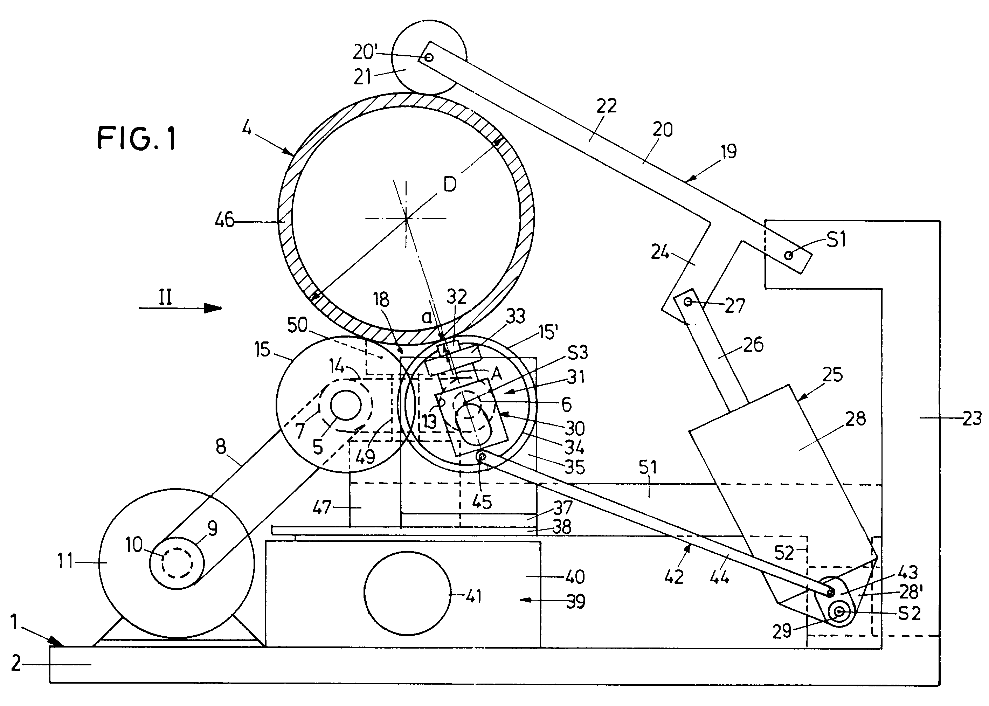

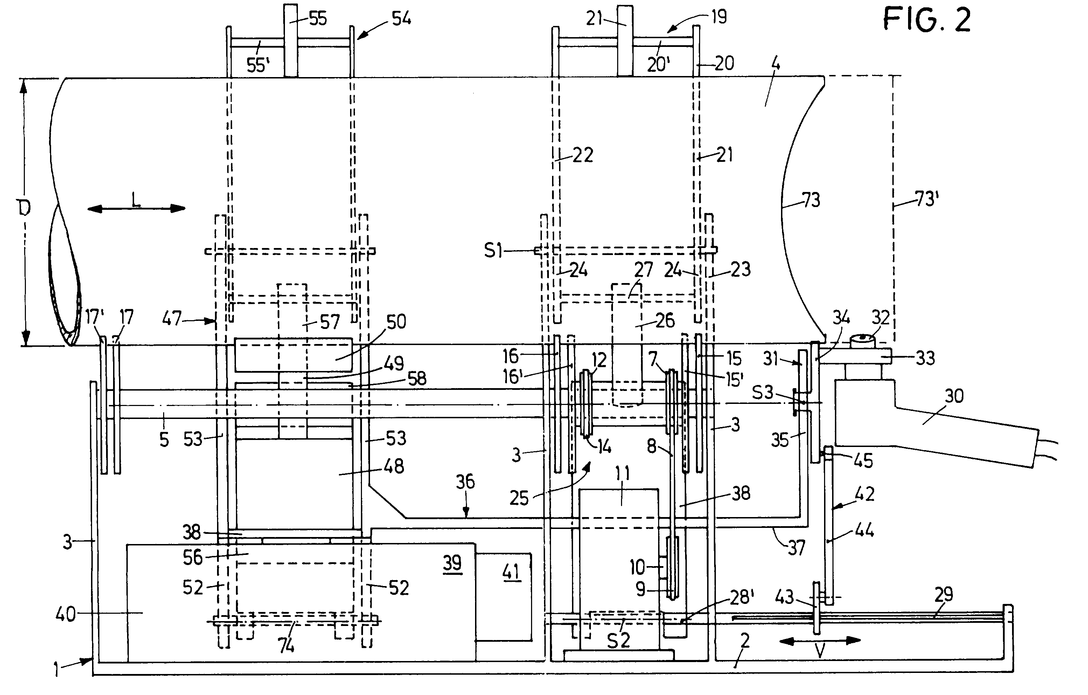

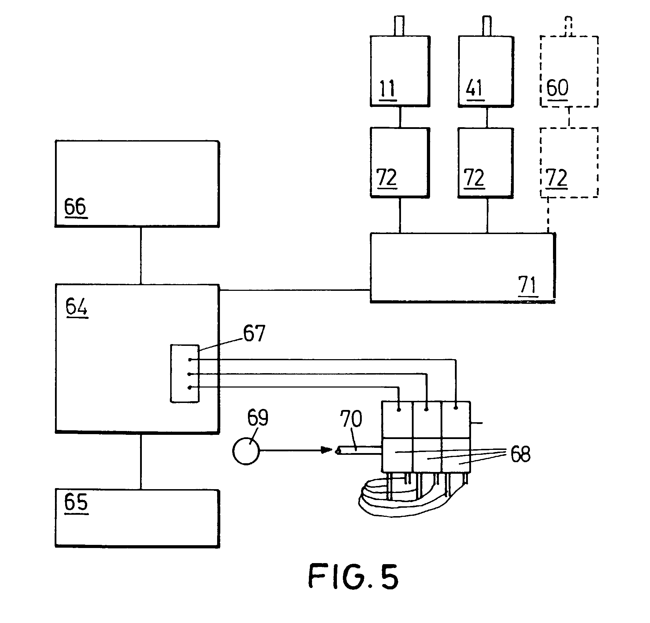

Die in Fig. 1 und 2 als Ganzes, jedoch ohne Steuereinrichtung (s. Fig. 5) dargestellte Vorrichtung zur maschinellen Schneidbearbeitung von Rohren weist einen Grundrahmen 1 mit einer Basisplatte 2 auf. Auf dieser sind drei Lagerwangen 3 nach oben stehend befestigt, deren Hauptebene jeweils vertikal und rechtwinklig zur Längsrichtung L des zu bearbeitenden Rohres 4 liegt. An diesen drei Lagerwangen 3 sind zwei parallel zur Rohrlängsrichtung L auf gleicher Höhe nebeneinanderverlaufende Lagerwellen 5, 6 drehbar gelagert. Auf der bezogen auf Fig. 2 linken Lagerwelle 5 sitzt drehfest ein erstes Zahnrad 7, das über einen Zahnriemen 8 mit einem Zahnrad 9 auf der Abtriebswelle 10 eines auf der Basisplatte 2 angebrachten Schrittmotors 11 verbunden ist. In Axialrichtung versetzt zum ersten Zahnrad 7 sitzt auf der Lagerwelle 5 ein zweites Zahnrad 12. In damit fluchtender Axialposition ist auf der zweiten Lagerwelle 6 ein weiteres Zahnrad 13 drehfest angeordnet. Die Zahnräder 12, 13 sind durch einen weiteren Zahnriemen 14 miteinander verbunden, so daß bei einer Betätigung des Schrittmotors 11 beide Lagerwellen 5, 6 in gleichsinniger Drehrichtung synchron in Rotation versetzt werden. Statt der Zahnriemen 8, 14 können auch Ketten verwendet werden.

Auf den Lagerwellen 5, 6 sitzen ferner drehfest jeweils drei Lagerscheiben 15, 16, 17, bzw. 15', 16', 17' wobei jeweils eine Lagerscheibe 15, 16, 17 auf der einen Lagerwelle 5 gegenüber der zugeordneten Lagerscheibe 15', 16', 17' auf der Lagerwelle 6 einen geringen Axialversatz aufweist, so daß die beiden entsprechend einander zugeordneten Lagerscheiben 15, 15' bzw. 16, 16' bzw. 17, 17' auf den beiden Lagerwellen 5, 6 ein Scheibenpaar bilden. Der Durchmesser der Lagerscheiben 15, 16, 17, 15', 16', 17' ist hinsichtlich des seitlichen Abstand der beiden Lagerwellen 5, 6 so ausgelegt, daß sich die beiden einander zugeordneten Lagerscheiben 15, 15' bzw. 16, 16' bzw. 17, 17' in Axialrichtung der Lagerwellen 5, 6 betrachtet überschneiden und somit einen zwickelartigen Auflagebereich 18 für das zu bearbeitende Rohr 4 bilden. Durch Einlage des Rohres 4 in diesen zwickelartigen Auflagebereich 18 ist dessen Radialposition exakt definiert. Bei einer gleichsinnigen Rotation der Lagerscheiben 15, 15' bzw. 16, 16' bzw. 17, 17' dreht sich das Rohr 4 um seine Längsachse.

Um während der noch näher zu erläuternden Schneidbearbeitung des Rohres 4 dessen Radialposition im Auflagebereich 18 zu fixieren, ist ferner eine Niederhalteeinrichtung 19 für das Rohr 4 vorgesehen. Diese weist einen von oben auf das Rohr 4 absenkbaren, rahmenförmigen Druckhebel 20 auf, mit dem das Rohr 4 in Richtung des zwickelartigen Auflagebereiches 8 über eine am freien Ende des Druckhebels 20 auf einer Achse 20' frei drehbare Andruckrolle 21 beaufschlagbar ist. Wie aus Fig. 1 deutlich wird, ist der Druckhebel 20 in Seitenansicht als Winkelhebel ausgebildet, dessen erster Arm 22 den eigentlichen Niederhalter für das Rohr 4 darstellt und um eine parallel zur Rohrlängsrichtung L liegende Schwenkachse S1 an einem Ständer 23 an der Basisplatte 2 des Grundrahmens 1 gelenkig gelagert ist. An dem im wesentlichen nach unten abstehenden zweiten Arm 24 des Druckhebels 20 greift ein pneumatisch betätigter Kolben-Zylinder-Antrieb 25 mit seiner Kolbenstange 26 über ein Gelenk 27 an.

Der Zylinder 28 des Kolben-Zylinder-Antriebes 25 ist an seinem kolbenstangenfernen Ende 28' auf einer sogenannten Keilwelle 29 um eine zur Rohrlängsrichtung L parallele Schwenkachse S2 schwenkbar angelenkt, wobei der Zylinder 28 jedoch drehfest mit der Keilwelle 29 verbunden ist. Der Zweck dieser speziellen Art von Lagerung wird im Weiteren noch näher erläutert.

Zur maschinellen Schneidbearbeitung des Rohres 4 ist ferner ein werkzeugfreies, berührungslos arbeitendes Plasma-Schneidgerät 30 vorgesehen, das an einer als Ganzes mit 31 bezeichneten Schwenkeinrichtung um eine Schwenkachse S3 schwenkbar gelagert ist, die konzentrisch mit der Rotationsachse der hinteren Lagerwelle 6 angeordnet ist. Der Schneidkopf 32 steht dabei in seinem Soll-Arbeitsabstand a (Fig. 1) zum zwickelartigen Auflagebereich 18. Ferner ist der Schneidkopf 32 des Schneidgerätes 30 über eine Halteplatte 33 so an einer in noch näher zu erläuternder Weise schwenkbar gelagerten Lagerscheibe 34 der Schwenkeinrichtung 31 angeordnet, daß die Schneidarbeitsrichtung A des Schneidkopfes 32 radial bezüglich der Schwenkachse S3 steht.

Die Lagerscheibe 34 ist an einem senkrecht stehenden Arm 35 eines Koppelmechanismus 36 befestigt, der eine den Arm 35 tragende, parallel zur Rohrlängsrichtung L verlaufende Koppelstange 37 umfaßt. Letztere ist an einem horizontal parallel zur Rohrlängsrichtung L linear verschiebbaren Führungsschlitten 38 befestigt, dessen Schiebebewegung von einem Linearantrieb 39 hervorgerufen wird. Der Führungsschlitten 38 ist dazu in einer nicht näher dargestellten Schiebeführung im Lagerbock 40 auf der Basisplatte 2 in dieser Richtung verschiebbar geführt und steht über einen ebenfalls nicht näher dargestellten Spindeltrieb mit einem Schrittmotor 41 in Verbindung. Durch den derart gestalteten Koppelmechanismus 36 erfolgt durch den Linearantrieb 39 eine Verschiebung des Schneidgerätes 30 mit seiner Schwenkeinrichtung 31 relativ zum zu bearbeitenden Rohr 4 in dessen Längsrichtung L.

Damit die Schneidarbeitsrichtung A abhängig vom Durchmesser D des zu bearbeitenden Rohres 4 automatisch exakt in Radialrichtung des jeweiligen Rohres eingestellt wird, ist ein weiterer Koppelmechanismus 42 zwischen der Schwenkeinrichtung 31 des Schneidgerätes 30 und dem Zylinder 28 des Kolben-Zylinder-Antriebes 24 vorgesehen. Dieser Koppelmechanismus 42 umfaßt einen auf der Keilwelle 29 drehfest, aber in ihrer Längsrichtung verschiebbar (Doppelpfeil V in Fig. 2) gelagerten Koppelarm 43, bei dem es sich um einen nach oben gerichteten, einarmigen Hebel handelt. Am freien Ende des Koppelarms 43 ist ein Koppellenker 44 angelenkt, der mit der Lagerscheibe 34 der Schwenkeinrichtung 31 nach Art eines Schubkurbelgetriebes gekoppelt ist. Das Gelenk 45 zwischen Koppellenker 44 und Lagerscheibe 34 liegt dabei dem Schneidkopf 32 des Schneidgerätes 30 diametral gegenüber.

Koppelarm 43 und Koppellenker 44 einerseits und der Kolben-Zylinder-Antrieb 25 mit dem zweiten Arm 24 des Druckhebels 20 andererseits bilden dabei über die Keilwelle 29 schwenkgekoppelte Kniehebelanordnungen, mittels derer über eine durch die Betätigung des Kolben-Zylinder-Antriebes 24 hervorgerufene Schwenkbewegung des Zylinders 28 eine automatische Nachführung der Schwenkeinrichtung 31 zur Einstellung des Schneidkopfes 32 in die Soll-Schneidposition erfolgt. Dies wird am folgenden Beispiel näher erläutert:

In Fig. 1 ist das Schneidgerät 30 in einer Soll-Schneidposition dargestellt, wie sie für das Rohr 4 mit relativ großem Durchmesser optimal ist. Die Schneidarbeitsrichtung A liegt also genau radial bezüglich des Rohrquerschnittes oder - mit anderen Worten - rechtwinklig zur Tangente an der Rohrwandung 46, die durch deren Berührungspunkt mit den rechten Lagerscheiben 15', 16', 17' auf der hinteren Lagerwelle 6 gelegt wird. Wird nun ein Rohr mit deutlich geringerem Durchmesser in den zwickelartigen Auflagebereich 18 eingelegt und der Kolben-Zylinder-Antrieb 25 so betätigt, daß sich die Kolbenstange 26 in den Zylinder 28 hineinzieht, senkt sich der Druckhebel 20 gegen den Uhrzeigersinn bezüglich Fig. 1 nach unten, bis die Andruckrolle 25 wieder auf dem Rohr aufliegt. Durch diese Schwenkbewegung des Druckhebels 20 wird der Kolben-Zylinder-Antrieb 25 im Uhrzeigersinn aufgerichtet. Dadurch dreht sich die Keilwelle 29 ebenfalls im Uhrzeigersinn und nimmt den Koppelarm 43 in dieser Richtung mit. Der Koppellenker 44 wird bezüglich Fig. 1 nach rechts gezogen, so daß die Lagerscheibe 34 der Schwenkeinrichtung 31 durch die schubkurbelartige Kopplung zwischen Koppellenker 44 und Lagerscheibe 34 gegen den Uhrzeigersinn gedreht wird. Das Schneidgerät 30 stellt sich dadurch flacher, so daß die Schneidarbeitsrichtung A seines Schneidkopfes 32 wiederum exakt radial zum kreisförmigen Querschnitt des zu bearbeitenden Rohres liegt. Durch die geschilderte Zwangskopplung der Schwenkeinrichtung 31 mit dem Druckhebel 20 wird also die für den Durchmesser eines jeweils zu bearbeitenden Rohres entsprechende Soll-Schwenkposition des Schneidgerätes 30 automatisch eingestellt.

Wie insbesondere aus Fig. 2 deutlich wird, weist eine erfindungsgemäße Schneidvorrichtung ferner eine mit dem Führungsschlitten 38 verbundene Klemmeinrichtung 47 zur Verschiebung des Rohres 4 parallel zu seiner Längsrichtung L auf. Hierbei ist einerseits ein auf dem Führungsschlitten 38 angeordneter Kolben-Zylinder-Antrieb 48 vorgesehen, an dessen vertikal gerichteter Kolbenstange 49 ein von unten gegen das Rohr 4 verschiebbarer, dieses anhebender Klemmgreifer 50 angebracht ist. Ferner ist am Führungsschlitten 38 eine doppelwangige, nach hinten gerichtete Quertraverse 51 vorgesehen, die vor ihrem hinteren Ende nach unten gerichtete Haltewangen 52 aufweist. Am hinteren ist ein Ständer 53 angebracht, der in Rohrlängsrichtung fluchtend mit dem Ständer 23 angeordnet ist und an seinem abgewinkelten Ende einen analog Druckhebel 20 ausgebildeten hebelartigen Klemmgegenhalter 54 mit Andruckrolle 55 auf der Achse 55' trägt. An diesem Klemmgegenhalter 54 greift wiederum ein Kolben-Zylinder-Antrieb 56 mit seiner Kolbenstange 57 an, der mit seinem Zylinder 58 gelenkig an einer zwischen den Haltewangen 52 sitzenden Achse 74 befestigt ist. Damit sind der Kolben-Zylinder-Antrieb 56 und Klemmgegenhalter 54 über den Führungsschlitten 38 vom Linearantrieb 39 synchron mit dem Klemmgreifer 50 in Rohrlängsrichtung L antreibbar.

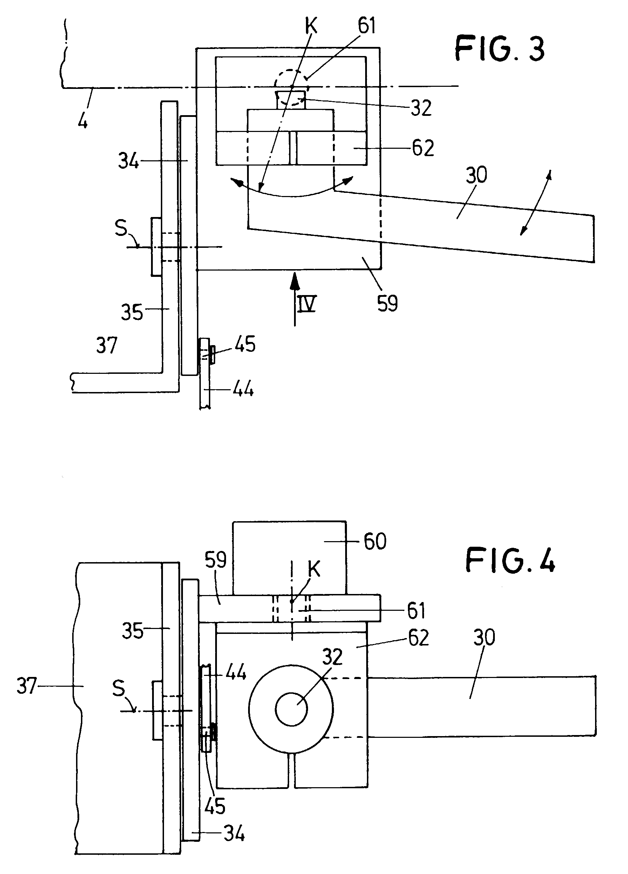

In der in den Fig. 3 und 4 dargestellten Weiterentwicklung einer erfindungsgemäßen Schneidvorrichtung ist das Schneidgerät 30 um eine quer zur Rohrlängsrichtung L durch seinen Schneidkopf 32 verlaufende Kippachse K an der Schwenkeinrichtung 31 verkippbar gelagert. Dazu weist die Lagerscheibe 34 eine in ihrem Randbereich rechtwinklig zu ihrer Ebene abstehende Lagerplatte 59 auf, an der ein Schrittmotor 60 befestigt ist. An dessen Abtriebswelle 61, die die Kippachse K definiert, ist eine Halteplatte 62 angebracht, in der das Schneidgerät 30 derart sitzt, daß die Schneidarbeitsrichtung A des Schneidkopfes 32 rechtwinklig zur Kippachse K angeordnet ist. Durch diese kippbare Lagerung des Schneidgerätes 30 ist es möglich, Schnitte in die Rohrwandung 46 einzubringen, deren Schnittebene nicht rechwinklig zur Rohrlängsrichtung 80 liegt. Der Schnitt kann also in einem praktisch beliebigen spitzen Winkel zur Rohrachse geneigt sein. Durch diesen schrägen Schnittverlauf kann bei dickwandigen Werkstücken eine speziell geformte Schweißfuge erzeugt werden. Auch können dadurch aus anderen, z.B. strömungstechnischen Gründen vorteilhafte Schrägen in die Rohrwandung 46 geschnitten werden.

In Fig. 5 ist ein Blockdiagramm der verwendeten Steuereinrichtung 63 dargestellt. Herzstück ist ein Personalcomputer 64 mit üblicher Tastatur 65 und Monitor 66. Im Personalcomputer 64 ist ein nicht näher zu erläuterndes Steuerprogramm geladen, das auf CN-Basis die Maschinenkomponenten steuert. Dazu ist der Personalcomputer 64 einerseits mit einer Treiberschaltung 67 für Magnetventile 68 versehen, die zwischen einer Druckluftquelle 69 und den Kolben-Zylinder-Antrieben 25, 48, 56 in entsprechende Druckluftleitungen 70 eingeschaltet sind. Ferner ist der Personalcomputer 64 mit einer Steuerplatine 71 für die Leistungsendstufen 72 der Schrittmotoren 11, 41 und gegebenenfalls 60 verbunden.

Mit Hilfe dieser Steuereinrichtung 63 wird beispielhaft folgender Funktionsablauf zur Erzielung der in Fig. 1 dargestellten Form des Endes 73 des Rohres 4 erzielt:

Bei nach oben abgehobenem Druckhebel 20 und Klemmgegenhalter 54 wird ein Rohr 4 in den zwickelartigen Auflagebereich 18 der Lagerscheiben 15, 16, 17, 15', 16', 17' eingelegt, so daß das noch nicht bearbeitete Ende 73' (strichliert dargestellt in Fig. 1) des Rohres in dessen Längsrichtung L etwas über das Schneidgerät 30 hinaussteht. Durch Betätigung des Kolben-Zylinder-Antriebes 25 wird der Druckhebel 20 nach unten abgesenkt, bis dessen Andruckrolle 21 auf dem Rohr 4 aufliegt und dieses somit zuverlässig festgehalten ist. Durch die Absenkbewegung des Druckhebels 20 wird gleichzeitig über den Koppelmechanismus 42 der Schneidkopf 32 des Schneidgerätes 30 in die Soll-Schwenkposition eingestellt. Der Klemmgreifer 50 ist währenddessen im übrigen abgesenkt und steht genauso wenig in Kontakt mit der Rohrwandung 46 wie der Klemmgegenhalter 54.

Es kann nun die Schneidbearbeitung des Rohrendes 73 erfolgen. Dazu wird das Schneidgerät 39 aktiviert und durch eine Betätigung der Schrittmotoren 11 und 41 die in Fig. 2 angedeutete Schnittkontur erzielt. Das Rohr 4 vollführt dabei eine rein rotatorische Bewegung z.B. im Uhrzeigersinn, was durch den Schrittmotor 41 und die gleichsinnige Rotation der Lagerscheiben 15, 16, 17, 15', 16', 17' hervorgerufen wird. Das Schneidgerät 30 vollführt gleichzeitig bedingt durch den Schrittmotor 41 eine oszillierende Linearbewegung parallel zur Rohrlängsrichtung L, indem der Führungsschlitten 38 entsprechend durch den Schrittmotor 41 hin- und herbewegt wird.

Soll anschließend das Rohr beispielsweise mittig mit einem Ausschnitt zur Einmündung eines zweiten Rohres versehen werden, so wird der Kolben-Zylinder-Antrieb 25 betätigt und der Druckhebel 20 nach oben weggeschwenkt. Gleichzeitig werden der Klemmgreifer 50 und der Klemmgegenhalter 54 durch eine entsprechende Betätigung der Kolben-Zylinder-Antriebe 48 und 56 durch die Steuereinrichtung 63 in Eingriff mit dem Rohr 4 gebracht, so daß dieses ergriffen und vom zwickelartigen Auflagebereich 18 abgehoben wird. Anschließend kann durch eine Betätigung des Schrittmotors 41 das Rohr - gegebenenfalls in mehreren aufeinanderfolgenden Betätigungsschritten - nach rechts bezüglich Fig. 2 verschoben werden, so daß die Rohrmitte im Bereich des Schneidgerätes 30 zum Liegen kommt. Anschließend wird wieder der Druckhebel 20 nach unten abgesenkt, so daß das Rohr 4 fest im zwickelartigen Auflagebereich 18 gehalten ist. Nach einem Wegfahren des Klemmgreifers 50 nach unten und des Klemmgegenhalters 54 nach oben kann - wie vorstehend erörtert - ein entsprechender Schnitt angebracht oder das Rohrstück von der linken Seite zugearbeitet werden, so daß beidseitig ausgeklinkte Rohre eventuell auch mit Ausschnitten in einem Durchgang (ohne Wenden des Rohres) und mit definiertem Verdrehwinkel der Ausnehmungen zueinander hergestellt werden.

Im übrigen ist darauf hinzuweisen, daß aufgrund der Kniehebelanordnung, die durch den zweiten Arm 24 des Druckhebels 20 mit dem Kolben-Zylinder-Antrieb 25 gebildet ist, bei gleichbleibender Preßluftbeaufschlagung des Kolben-Zylinder-Antriebs 25 durch die Andruckrolle 21 auf den Durchmesser und damit die Masse des zu bearbeitenden Rohres 4 abgestimmte Klemmkräfte ausgeübt werden. Für Rohre mit großem Durchmesser, die in der Regel dickwandig und damit träge sind, werden hohe Klemmkräfte erzeugt, die eine gute Beschleunigung sowohl in der Drehbewegung durch den Schrittmotor 11 als auch in der Förderbewegung durch den Schrittmotor 41 zulassen. Bei dünneren Rohren wird eine wesentlich geringere Klemmkraft aufgebracht, da der Drehpunkt 27 der Kniehebelanordnung zwischen Arm 24 und Kolben-Zylinder-Antrieb 25 in Richtung auf die Verbindungslinie zwischen den Schwenkachsen S1 und S2 wandert.

Da der Klemmgegenhalter 54 mit seinem Kolben-Zylinder-Antrieb 56 analog der Niederhalteeinrichtung 19 mit ihrem Druckhebel 20 und dem Kolben-Zylinder-Antrieb 25 ausgebildet ist, treffen die vorstehenden Ausführungen auch auf den Klemmgegenhalter 54 zu.

## Patentansprüche

1. Vorrichtung zur maschinellen Schneidbearbeitung von Rohren, insbesondere zum maschinellen Ausklinken von Rohrenden, zum Einbringen von Ausschnitten in die Rohrwandung und dergleichen, mit:
- einem Grundrahmen (1),
- einer daran angeordneten, rotationsgetriebenen Lagervorrichtung zur drehbaren Lagerung des zu bearbeitenden Rohres (4), die aus mindestens zwei in Rohrlängsrichtung (L) mit Abstand zueinander angeordneten Paaren von parallel zueinander ausgerichteten Lagerscheiben (15, 16, 17, 15', 16', 17') gebildet ist, wobei jedes Paar von Lagerscheiben (15, 16, 17, 15', 16', 17') durch einen seitlichen Versatz der Lagerwellen (5, 6) der Lagerscheiben (15, 16, 17) einen zwickelartigen Auflagebereich (18) für das zu bearbeitende Rohr (4) bildet,
- einer Niederhalteeinrichtung (19) für das Rohr (4) in Form eines von oben auf das Rohr (4) absenkbaren, am Grundrahmen (1) um eine parallel zur Längsrichtung (L) liegende Schwenkachse (S1) gelenkig gelagerten, in Richtung des zwickelartigen Auflagebereiches (18) beaufschlagbaren Druckhebels (20),
- einem werkzeugfreien, berührungslos arbeitenden Schneidgerät, insbesondere einem Laser-, Autogenbrenn-, Wasserstrahl- oder Plasmaschneidgerät (30),
-- das an einer Schwenkeinrichtung (31) um eine Schwenkachse (S2) schwenkbar gelagert ist, die konzentrisch mit einer Lagerwelle (5, 6) einer der Lagerscheiben (15, 16, 17, 15', 16', 17') der Lagervorrichtung für das Rohr (4) angeordnet ist,
-- dessen Schneidkopf (32) in einem Soll-Arbeitsabstand (a) zum zwickelartigen Auflagebereich (18) sowie mit seiner Schneidarbeitsrichtung (A) radial bezüglich der Schwenkachse (S1) steht, und
-- dessen Schwenkeinrichtung (31) derart über einen Koppelmechanismus (42) mit dem Druckhebel (20) der Niederhalteeinrichtung (19) zwangsgekoppelt ist, daß der Druckhebel (20) automatisch die für den Durchmesser eines jeweils zu bearbeitenden Rohres (4) entsprechende Soll-Schwenkposition des Schneidgerätes (30) einstellt,
- einem Linearantrieb (39) zur Relativverschiebung von Schneidgerät (30) und zu bearbeitendem Rohr (4) in Rohrlängsrichtung (L), und
- einer Steuereinrichtung (63), die mit dem Drehantrieb (11) der rotationsgetriebenen Lagervorrichtung und mit dem Linearantrieb (39) für die obengenannte Relativverschiebung zur Erzeugung einer überlagerten Rotations-Linear-Bewegung von Rohr (4) und Schneidgerät (30) zueinander gekoppelt ist

2. Vorrichtung nach Anspruch 1, dadurch gekennzeichnet, daß der Druckhebel (20) als Winkelhebel ausgebildet ist, dessen erster Arm (22) der Niederhalter für das Rohr (4) ist und an dessen zweitem Arm (24) die Kolbenstange (26) eines Kolben-Zylinder-Antriebes (25) zur Betätigung des Druckhebels (20) angreift.

3. Vorrichtung nach Anspruch 2, dadurch gekennzeichnet,
- daß der Zylinder (28) des Kolben-Zylinder-Antriebes (25) an einer am Grundrahmen (2) schwenkbar gelagerten Achse (29) drehfest zu dieser angelenkt ist,
- daß auf der Achse (29) drehfest, aber in ihrer Längsrichtung verschiebbar ein Koppelarm (43) des Koppelmechanismus (42) gelagert ist, und
- daß zwischen Koppelarm (43) und Schwenkeinrichtung (41) ein Koppellenker (44) des Koppelmechanismus (42) derart gelenkig eingebunden ist, daß durch eine Betätigung eines Kolben-Zylinder-Antriebes (25) und die dadurch hervorgerufene Schwenkbewegung dessen Zylinders (28) eine Nachführung der Schwenkeinrichtung (31) zur Einstellung des Schneidkopfes (32) in die Soll-Schneidposition erfolgt.

4. Vorrichtung nach Anspruch 3, dadurch gekennzeichnet, daß der zweite Arm (24) des Druckhebels (20) mit dem Kolben-Zylinder-Antrieb (25) einerseits und der Koppelarm (43) mit dem Koppellenker (44) andererseits jeweils eine Kniehebelanordnung bilden und daß der Koppellenker (44) mit einer Lagerscheibe (34) der Schwenkeinrichtung (31) nach Art eines Schubkurbelgetriebes gekoppelt ist.

5. Vorrichtung nach einem der Ansprüche 1 bis 4, dadurch gekennzeichnet, daß die Schwenkeinrichtung (31) des Schneidgerätes (30) an einem parallel zur Rohrlängsrichtung (L) verschiebbar angetriebenen Führungsschlitten (38) angebracht ist.

6. Vorrichtung nach Anspruch 5, dadurch gekennzeichnet, daß am Führungsschlitten (38) ferner eine Klemmeinrichtung (47) zur Verschiebung des Rohres (4) parallel zu seiner Längsrichtung (L) angebracht ist.

7. Vorrichtung nach Anspruch 6, dadurch gekennzeichnet, daß die Klemmeinrichtung (47) einen von unten gegen das Rohr (4) verschiebbaren, diesen anhebenden Klemmgreifer (50) und einen von oben auf das Rohr (4) absenkbaren Klemmgegenhalter (54) aufweist.

8. Vorrichtung nach Anspruch 7, dadurch gekennzeichnet, daß der Klemmgegenhalter (54) von einem Kolben-Zylinder-Antrieb (56) antreibbar ist, wobei Klemmgegenhalter (54) und Kolben-Zylinder-Antrieb (56) gemeinsam an einer Quertraverse (51) angebracht sind, die am Führungsschlitten (38) befestigt ist.

9. Vorrichtung nach einem der Ansprüche 1 bis 8, dadurch gekennzeichnet, daß das Schneidgerät (30) um eine quer zur Rohrlängsrichtung (L) durch seinen Schneidkopf (30) verlaufende Kippachse (K) verkippbar an der Schwenkeinrichtung (31) gelagert ist.
